(19) Europäisches Patentamt / European Patent Office / Office européen des brevets

(11) **EP 3 186 673 B1**

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **15760406.7**

(22) Anmeldetag: **25.08.2015**

(51) Internationale Patentklassifikation (IPC):
**G02B 21/36** (2006.01) **G01J 3/46** (2006.01)
**G01J 3/52** (2006.01)

(52) Gemeinsame Patentklassifikation (CPC):
**G01J 3/524; G02B 21/365**

(86) Internationale Anmeldenummer:
**PCT/EP2015/069435**

(87) Internationale Veröffentlichungsnummer:
**WO 2016/030366 (03.03.2016 Gazette 2016/09)**

(54) **VERFAHREN ZUM KORRIGIEREN EINER FARBWIEDERGABE EINES DIGITALEN MIKROSKOPS SOWIE DIGITALES MIKROSKOP**

METHOD FOR CORRECTING A COLOR REPRODUCTION OF A DIGITAL MICROSCOPE AND DIGITAL MICROSCOPE

PROCÉDÉ DE CORRECTION D'UN RENDU DE COULEUR D'UN MICROSCOPE NUMÉRIQUE ET MICROSCOPE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2014 DE 102014112285**

(43) Veröffentlichungstag der Anmeldung:
**05.07.2017 Patentblatt 2017/27**

(73) Patentinhaber: **Carl Zeiss Microscopy GmbH 07745 Jena (DE)**

(72) Erfinder:
• **GAIDUK, Alexander** 07749 Jena (DE)
• **GÖTZ, Burkhard** 07745 Jena (DE)
• **KALININ, Stanislav** 99427 Weimar (DE)
• **WACKE, Michael** 37085 Göttingen (DE)
• **JÄGER, Markus** 04420 Markranstädt (DE)

(74) Vertreter: **Engel, Christoph Klaus et al PATENTSCHUTZengel Marktplatz 6 98527 Suhl (DE)**

(56) Entgegenhaltungen:
WO-A1-2010/002070 US-A1- 2008 018 735
US-A1- 2009 141 127 US-A1- 2013 044 200
US-A1- 2014 055 592

**Beschreibung**

Die vorliegende Erfindung betrifft zunächst ein Verfahren zum Korrigieren von Farben einer Farbwiedergabe eines digitalen Mikroskops. Durch das Verfahren ist eine farbgetreue Wiedergabe einer zur mikroskopierenden Probe ermöglicht. Es handelt sich somit um ein Verfahren zum Farbmanagement des digitalen Mikroskops. Im Weiteren betrifft die Erfindung ein digitales Mikroskop mit einer Bildverarbeitungseinheit, welche für eine Farbkorrektur ausgebildet ist.

Die US 2013/0044200 A1 zeigt ein System zur Farbkorrektur in Objektträgern für die Mikroskopie. Der eine Probe tragende Objektträger weist zusätzlich eine Mehrzahl an Farbreferenzen auf. Die Farbreferenzen werden gemeinsam mit der Probe beleuchtet und vom Mikroskop aufgenommen. Anhand der aufgenommenen Farbreferenzen erfolgt eine Farbkorrektur des aufgenommenen Bildes.

Die US 8,238,534 B2 lehrt eine Vorrichtung zur Mikroskopie, welche eine Einheit zur Erfassung eines einer Mikroskopbeleuchtung ausgesetzten optischen Elementes umfasst. Entsprechend dem jeweils erfassten optischen Element werden Parameter zur Farbkorrektur aus einem Speicher ausgelesen, um damit eine Farbkorrektur der mit einer Bildaufnahmeeinheit des Mikroskops aufgenommenen Bilder vorzunehmen.

Aus der US 2014/0055592 A1 ist ein System zur Farbkorrektur in Objektträgern für die Durchlichtmikroskopie bekannt, bei welchem auf den Objektträgern ein Farbfilterfeld angeordnet ist. Das Farbfilterfeld wird von der Mikroskopbeleuchtung durchleuchtet und aufgenommen, um eine Farbkorrektur der ausgenommenen Bilder durchzuführen.

Die JP 4311945 B2 zeigt eine elektronische Kamera für die Mikroskopie, bei welcher eine Korrektur des Farbtons und der Farbsättigung eines aufgenommenen Videosignals durch eine Multiplikation mit vorab festgelegten Koeffizienten erfolgt.

Aus der JP 4217494 B2 ist eine elektronische Kamera für ein Mikroskop bekannt, in welcher mithilfe eines Prozessors eine geeignete Farbabstufung aus einer Vielzahl möglicher Farbabstufungen ausgewählt wird.

Die EP 2 204 980 B1 zeigt ein Bildverarbeitungssystem für ein Mikroskop, bei welchem mit einer Bildaufnahmevorrichtung erste und zweite Bilddaten erfasst werden. Mithilfe einer RGB-Interpolationseinheit werden daraus erste interpolierte RGB-Bilddaten und zweite interpolierte RGB-Bilddaten erzeugt. Die ersten interpolierten RGB-Bilddaten werden farbkorrigiert, um eine Farbmatrix und einen Gradierungsparameter zu berechnen, welche zur Farbkorrektur der zweiten interpolierten RGB-Bilddaten benutzt werden.

Die US 2012/0050727 A1 zeigt ein Abbildungssystem, welches beispielsweise als Mikroskop ausgebildet ist und eine Korrektureinheit umfasst, welche zur Korrektur von Bildern der abzubildenden Probe dient. Diese Korrektur basiert auf spektralen Informationen, welche mit einem spektralen Sensor erfasst wurden.

Die US 2011/0249155 A1 zeigt ein Bildaufnahmesystem, welches insbesondere als Mikroskop ausgebildet ist und eine Farbtonkorrektureinheit umfasst, die zur Korrektur von mit einem Zeilensensor aufgenommenen Bildern der abzubildenden Probe dient. Diese Korrektur basiert auf spektralen Informationen, welche mit einem spektralen Sensor erfasst wurden.

Die US 2008/0018735 A1 lehrt eine mikroskopische Aufnahmeeinrichtung, in welcher eine Farbkorrekturmatrix angewendet wird, die aus einer Kameracharakteristik berechnet wird. Die Kameracharakteristik ist in einem Speicher abgelegt und enthält Angaben über die spektrale Empfindlichkeit des Bildwandlers, die aus dem Hintergrund des aufgenommenen Bildes bestimmt werden.

Aus der DE 10 2005 031 104 A1 ist ein Verfahren zur farbgetreuen Bildwiedergabe eines automatischen Mikroskops bekannt. Bei diesem Verfahren werden die Parameter zum Ansteuern einer Lichtquelle erfasst, um diese bei einer Erstinbetriebnahme einer gemessenen spektralen Verteilung der Lichtquelle zuzuordnen und um diese Zuordnungsinformationen im späteren regulären Betrieb für eine geregelte Ansteuerung der Lichtquelle zu nutzen. Weiterhin soll eine Kompensation festgestellter spektraler Abweichungen durch eine Anpassung der spektralen Verteilung des Monitorbildes an die spektrale Verteilung der Lichtquelle erfolgen.

Die US 2009/0141127 A1 zeigt ein Bildverarbeitungssystem mit einer Bilderfassungseinheit und mit einer ersten Bildverarbeitungseinheit zur Farb- und Gradationskorrektur sowie mit einer zweiten Bildverarbeitungseinheit zur Farbkorrektur basierend auf einem Farberscheinungsmodell. Das Bildverarbeitungssystem ist u. a. dazu ausgebildet, eine elektrische Spannung zum Betreiben einer Halogenlampe für eine Mikroskopbeleuchtung zu erfassen, um davon ausgehend Korrekturwerte zur Korrektur eines aufgenommenen Bild zu bestimmen.

Die Aufgabe der vorliegenden Erfindung besteht ausgehend vom Stand der Technik darin, dass die wellenlängenabhängigen Eigenschaften sämtlicher Komponenten eines digitalen Mikroskops, welche die Farbwiedergabe beeinflussen, aufwandsarm berücksichtigt werden können, um eine farbgetreue Wiedergabe einer zur mikroskopierenden Probe zu ermöglichen. Die genannte Aufgabe wird gelöst durch ein Verfahren gemäß dem beigefügten Anspruch 1 sowie durch ein digitales Mikroskop gemäß dem beigefügten nebengeordneten Anspruch 7.

Das erfindungsgemäße Verfahren dient zum Korrigieren von Farben einer Farbwiedergabe eines digitalen Mikroskops. Bei einem digitalen Mikroskop erfolgt eine elektronische Bildwandlung, wobei das aufgenommene Bild in Form von digitalen Daten weiterverarbeitet und zur Anzeige auf einer elektronischen Bildwiedergabeeinrichtung gebracht wird.

In einem ersten Schritt des erfindungsgemäßen Verfahrens wird mit dem digitalen Mikroskop ein farbiges Bild einer zu mikroskopierenden Probe aufgenommen. Dieses farbige Bild ist Gegenstand der Farbkorrektur. Bei der Aufnahme werden wellenlängenabhängige Eigenschaften einer die Probe beleuchtenden Mikroskopbeleuchtung zur Beschreibung eines Zustandes der Mikroskopbeleuchtung ermittelt, indem an der Mikroskopbeleuchtung gewählte Einstellungen erfasst werden. Dieser Schritt des Verfahrens berücksichtigt, dass Mikroskopbeleuchtungen zur Anpassung an die zu erzielende Aufnahme veränderbar sind. Beispielsweise kann die Beleuchtungsstärke variiert werden oder es kann eine bestimmte Art der Beleuchtung, wie eine Hellfeld- und Dunkelfeldbeleuchtung ausgewählt werden oder es können unterschiedliche Einzellichtquellen ausgewählt und ausgerichtet werden. Die an der Mikroskopbeleuchtung gewählten Einstellungen umfassen somit Parametereinstellungen und/oder eine Auswahl von Konfigurationen. Die Einstellungen und/oder die wellenlängenabhängigen Eigenschaften der Mikroskopbeleuchtung sind bevorzugt in einem oder mehreren Speichern gespeichert, sodass das Erfassen der Einstellungen ein Auslesen des Speichers umfasst. Auch können die Einstellungen mittelbar dadurch erfasst werden, dass das von der Mikroskopbeleuchtung abgegebene Beleuchtungslicht spektral ausgemessen wird; beispielsweise mit einem Miniaturspektrometer oder mit einem Miniaturmultiwellenlängenbildsensor. Die Einstellungen führen in ihrer Gesamtheit zu einem Zustand der Mikroskopbeleuchtung, welcher erfindungsgemäß durch die Erfassung der Einstellungen festgehalten wird. Die unterschiedlichen Zustände der Mikroskopbeleuchtung sind dadurch gekennzeichnet, dass sie zu unterschiedlichen wellenlängenabhängigen Eigenschaften der Mikroskopbeleuchtung führen. Insbesondere ist die von der Mikroskopbeleuchtung auf der Probe bewirkte Strahlungsintensität der elektromagnetischen Strahlung wellenlängenabhängig.

In einem weiteren Schritt des erfindungsgemäßen Verfahrens wird ein Satz von Korrekturwerten bestimmt. Der Satz von Korrekturwerten ist beispielsweise durch ein Feld, bevorzugt durch einen oder mehrere Vektoren oder durch eine oder mehrere Matrizen von Korrekturwerten gebildet. Die Korrekturwerte stellen Korrekturfaktoren dar. Der zu bestimmende Satz von Korrekturwerten ist einem Zustand der Mikroskopbeleuchtung zugeordnet, welcher entsprechend dem bei der Aufnahme ermittelten Zustand der Mikroskopbeleuchtung gewählt wird, d. h. der zu bestimmende Satz von Korrekturwerten wird entsprechend dem bei der Aufnahme ermittelten Zustand der Mikroskopbeleuchtung gewählt, wofür der zugeordnete Zustand als Kriterium dient. Der zu bestimmende Satz von Korrekturwerten ist geeignet, eine Farbkorrektur von solchen aufgenommenen Bildern vorzunehmen, welche in dem zugeordneten Zustand der Mikroskopbeleuchtung aufgenommen wurden. Mit dem zu bestimmenden Satz von Korrekturwerten kann das zuvor aufgenommene farbige Bild der Probe farbkorrigiert werden.

In einem weiteren Schritt des erfindungsgemäßen Verfahrens werden die Farben des aufgenommenen farbigen Bildes der Probe durch Anwenden der Korrekturwerte des zuvor bestimmten Satzes korrigiert. Im Ergebnis liegt ein farbkorrigiertes Bild der aufgenommenen Probe vor. Die Farbkorrektur umfasst bevorzugt auch einen Weißabgleich.

Ein besonderer Vorteil des erfindungsgemäßen Verfahrens besteht darin, dass für die Farbkorrektur des mit dem digitalen Mikroskop aufgenommenen Bildes die wellenlängenabhängigen spektralen Eigenschaften der Mikroskopbeleuchtung in deren jeweils aktuell eingestellten Zustand berücksichtigt werden.

Bei bevorzugten Ausführungsformen des erfindungsgemäßen Verfahrens werden auch wellenlängenabhängige Eigenschaften einer optischen Aufnahmeeinrichtung des Mikroskops berücksichtigt. Die optische Aufnahmeeinrichtung umfasst eine Optik und einen elektronischen Bildwandler. Die Optik umfasst beispielsweise ein Objektiv, eine Blende und eine Zoom-Optik. Der Bildwandler kann auch als Sensor oder Bildsensor bezeichnet werden. Bei diesen bevorzugten Ausführungsformen werden beim Aufnehmen des farbigen Bildes der zu mikroskopierenden Probe weiterhin wellenlängenabhängige Eigenschaften der optischen Aufnahmeeinrichtung zur Beschreibung eines Zustandes der optischen Aufnahmeeinrichtung ermittelt, indem an der optischen Aufnahmeeinrichtung gewählte Einstellungen erfasst werden. Durch unterschiedliche Einstellungen, beispielweise durch unterschiedliche Parametereinstellungen oder durch unterschiedliche Konfigurationen der Optik, sind unterschiedliche Zustände der optischen Aufnahmeeinrichtung gegeben, in denen die optische Aufnahmeeinrichtung unterschiedliche wellenlängenabhängige Eigenschaften aufweist. Diese an der optischen Aufnahmeeinrichtung gewählten Einstellungen werden gemeinsam mit den an der Mikroskopbeleuchtung gewählten Einstellungen erfasst. Die Einstellungen und/oder die wellenlängenabhängigen Eigenschaften der optischen Aufnahmeeinrichtung sind bevorzugt in einem oder mehreren Speichern gespeichert, sodass das Erfassen der Einstellungen ein Auslesen des Speichers umfasst. Bei diesen bevorzugten Ausführungsformen ist der zu bestimmende Satz von Korrekturwerten weiterhin einem Zustand der optischen Aufnahmeeinrichtung zugeordnet. Somit ist der zu bestimmende Satz von Korrekturwerten einem Zustand der Mikroskopbeleuchtung und einem Zustand der optischen Aufnahmeeinrichtung zugeordnet. Der dem zu bestimmenden Satz von Korrekturwerten zugeordnete Zustand der optischen Aufnahmeeinrichtung wird entsprechend dem bei der Aufnahme ermittelten Zustand der optischen Aufnahmeeinrichtung ausgewählt. Der zu bestimmende Satz von Korrekturwerten ist geeignet, eine Farbkorrektur von solchen aufgenommenen Bildern vorzunehmen, welche in dem zugeordneten Zustand der Mikroskopbeleuchtung und in dem zugeordneten Zustand der optischen Aufnahmeeinrichtung aufgenommen wurden. Der zu bestimmende Satz von Korrekturwerten ist geeignet, um damit das zuvor aufgenommene farbige Bild der Probe zu korrigieren. Ein Vorteil dieser bevorzugten Ausführungsformen besteht darin, dass die wellenlängenabhängigen Eigenschaften sämtlicher Komponenten des digitalen Mikroskops, welche die Farbwiedergabe beeinflussen, berücksichtigt werden. Nachfolgend werden bevorzugte Ausführungsformen beschrieben, bei denen die wellenlängenabhängigen Eigenschaften der optischen Aufnahmeeinrichtung bevorzugt, aber nicht zwingend zu berücksichtigen sind.

Das Bestimmen eines Satzes von Korrekturwerten umfasst bevorzugt einen Teilschritt, bei welchem mindestens ein Satz von Korrekturwerten aus einer Mehrzahl an gespeicherten und unterschiedlichen Zuständen der Mikroskopbeleuchtung und ggf. unterschiedlichen Zuständen der optischen Aufnahmeeinrichtung zugeordneten Sätzen von Korrekturwerten ausgewählt wird. Dabei kommt der dem ausgewählten Satz von Korrekturwerten zugeordnete Zustand der Mikroskopbeleuchtung dem bei der Aufnahme ermittelten Zustand der Mikroskopbeleuchtung am nächsten. Insofern die wellenlängenabhängigen Eigenschaften der optischen Aufnahmeeinrichtung berücksichtigt werden, so kommt auch der dem ausgewählten Satz von Korrekturwerten zugeordnete Zustand der optischen Aufnahmeeinrichtung dem bei der Aufnahme ermittelten Zustand der optischen Aufnahmeeinrichtung am nächsten. Man vergleicht somit die ermittelten Zustände der Mikroskopbeleuchtung und ggf. der optischen Aufnahmeeinrichtung mit den den gespeicherten Sätzen zugeordneten Zuständen der Mikroskopbeleuchtung und ggf. der optischen Aufnahmeeinrichtung, um zueinander passende Zustände zu finden, sodass mindestens ein Satz an Korrekturwerten gewählt wird, welcher zur Farbkorrektur des aufgenommenen Bildes geeignet ist.

Bei einer ersten Gruppe bevorzugter Ausführungsformen wird der ausgewählte Satz von Korrekturwerten unmittelbar als der zu bestimmende Satz von Korrekturwerten verwendet, sodass die Korrekturwerte des ausgewählten Satzes unmittelbar zur Farbkorrektur des aufgenommenen Bildes verwendet werden. Diese erste Gruppe bevorzugter Ausführungsformen ist insbesondere dann geeignet, wenn der dem ausgewählten Satz von Korrekturwerten zugeordnete Zustand der Mikroskopbeleuchtung dem bei der Aufnahme ermittelten Zustand der Mikroskopbeleuchtung gleicht und, falls die wellenlängenabhängigen Eigenschaften der optischen Aufnahmeeinrichtung berücksichtigt werden, der dem ausgewählten Satz von Korrekturwerten zugeordnete Zustand der optischen Aufnahmeeinrichtung dem bei der Aufnahme ermittelten Zustand der optischen Aufnahmeeinrichtung gleicht.

Bei einer zweiten Gruppe bevorzugter Ausführungsformen umfasst das Bestimmen eines Satzes von Korrekturwerten weiterhin einen Teilschritt, bei welchem die Korrekturwerte des ausgewählten Satzes angepasst werden, um daraus den zu bestimmenden Satz an Korrekturwerten zu erhalten. Dieses Anpassen ist bevorzugt durch ein Extrapolieren gebildet. Diese zweite Gruppe bevorzugter Ausführungsformen ist insbesondere dann geeignet, wenn der dem ausgewählten Satz von Korrekturwerten zugeordnete Zustand der Mikroskopbeleuchtung nur nahe dem bei der Aufnahme ermittelten Zustand der Mikroskopbeleuchtung ist und/oder, falls die wellenlängenabhängigen Eigenschaften der optischen Aufnahmeeinrichtung berücksichtigt werden, wenn der dem ausgewählten Satz von Korrekturwerten zugeordnete Zustand der optischen Aufnahmeeinrichtung nur nahe dem bei der Aufnahme ermittelten Zustand der optischen Aufnahmeeinrichtung ist.

Bei einer dritten Gruppe bevorzugter Ausführungsformen werden mindestens zwei der Sätze von Korrekturwerten aus der Mehrzahl an gespeicherten und unterschiedlichen Zuständen der Mikroskopbeleuchtung und ggf. unterschiedlichen Zuständen der optischen Aufnahmeeinrichtung zugeordneten Sätzen von Korrekturwerten ausgewählt, um daraus mittelbar den zu bestimmenden Satz an Korrekturwerten zu erhalten. Hierfür umfasst das Bestimmen eines Satzes von Korrekturwerten weiterhin einen Teilschritt, bei welchem die Korrekturwerte der beiden ausgewählten Sätze interpoliert werden, wobei das Ergebnis der Interpolation den zu bestimmenden Satz von Korrekturwerten darstellt. Diese dritte Gruppe bevorzugter Ausführungsformen ist insbesondere dann geeignet, wenn der bei der Aufnahme ermittelte Zustand der Mikroskopbeleuchtung quantitativ zwischen denen der beiden ausgewählten Sätze von Korrekturwerten liegt, bzw. wenn der erfasste Zustand der optischen Aufnahmeeinrichtung quantitativ zwischen denen der beiden ausgewählten Sätze von Korrekturwerten liegt. Die beiden ausgewählten Sätze von Korrekturwerten können beispielsweise solchen Zuständen der Mikroskopbeleuchtung bzw. der optischen Aufnahmeeinrichtung zugeordnet sein, welche Extrema der an der Mikroskopbeleuchtung bzw. an der optischen Aufnahmeeinrichtung gewählten Einstellungen entsprechen.

Das erfindungsgemäße Verfahren wird bevorzugt unter Anwendung von Farbfamilien durchgeführt. Die Farbfamilien umfassen jeweils eine Auswahl von durch die Farbwiedergabe darstellbaren Farben. Bei diesen Ausführungsformen werden zum Bestimmen eines Satzes von Korrekturwerten zunächst im aufgenommenen Bild auftretende Farbwerte bestimmt und diese einer von mehreren vorab festgelegten Farbfamilien zugeordnet. Die gespeicherten und unterschiedlichen Zuständen der Mikroskopbeleuchtung und ggf. unterschiedlichen Zuständen der Aufnahmeeinrichtung zugeordneten Sätze von Korrekturwerten sind jeweils einer der vorab festgelegten Farbfamilien zugeordnet. Der ausgewählte Satz von Korrekturwerten ist derjenigen der Farbfamilien zugeordnet, die auch dem aufgenommenen Bild zugeordnet ist. Dabei enthält der ausgewählte Satz von Korrekturwerten insbesondere nur solche Korrekturwerte, die zur Korrektur der Farben diese Farbfamilie geeignet sind. Diese Ausführungsformen weisen den Vorteil auf, dass die Korrekturwerte nur für eine begrenzte Auswahl aller möglichen Farben vorliegen müssen, sodass eine kleinere Menge an Daten verarbeitet werden kann.

Bei weiteren bevorzugten Ausführungsformen wird davon ausgegangen, dass die den Sätzen an Korrekturwerten zugeordneten Farbfamilien nicht vollständig sind. Bei diesen Ausführungsformen werden zum Bestimmen eines Satzes von Korrekturwerten zunächst wieder im aufgenommenen Bild auftretende Farbwerte bestimmt und diese einer von mehreren vorab festgelegten Farbfamilien zugordnet. Die Farbfamilien umfassen jeweils eine Auswahl von durch die Farbwiedergabe darstellbaren Farben. Die gespeicherten und unterschiedlichen Zuständen der Mikroskopbeleuchtung und ggf. unterschiedlichen Zuständen der optischen Aufnahmeeinrichtung zugeordneten Sätze von Korrekturwerten sind jeweils einer der Farbfamilien zugeordnet, wobei der ausgewählte Satz von Korrekturwerten derjenigen der Farbfamilien zugeordnet ist, welche der dem aufgenommenen Bild zugeordneten Farbfamilie am nächsten kommt.

Die gespeicherten und unterschiedlichen Zuständen der Mikroskopbeleuchtung und ggf. unterschiedlichen Zuständen der optischen Aufnahmeeinrichtung zugeordneten Sätze von Korrekturwerten werden bevorzugt zuvor ermittelt, d. h. bevor das Bild der zu mikroskopierenden Probe aufgenommen wird. Dieses Ermitteln der Sätze von Korrekturwerten erfolgt bevorzugt in einem Kalibrierungsvorgang, welcher vor dem Mikroskopieren von Proben stattfindet.

Das Ermitteln der Sätze von Korrekturwerten, d. h. der Kalibrierungsvorgang, umfasst bevorzugt mehrere Teilschritte. In einem Teilschritt werden die wellenlängenabhängigen Eigenschaften der Mikroskopbeleuchtung in den mehreren Zuständen der Mikroskopbeleuchtung unter Zuordnung der an der Mikroskopbeleuchtung gewählten Einstellungen erfasst. Insofern die wellenlängenabhängigen Eigenschaften der optischen Aufnahmeeinrichtung berücksichtigt werden, erfolgt auch ein Teilschritt, bei welchem die wellenlängenabhängigen Eigenschaften der optischen Aufnahmeeinrichtung in den mehreren Zuständen der optischen Aufnahmeeinrichtung unter Zuordnung der an der optischen Aufnahmeeinrichtung gewählten Einstellungen erfasst werden. In einem weiteren Teilschritt wird in jedem der mehreren Zuständen der Mikroskopbeleuchtung und ggf. in jedem der mehreren Zuständen der optischen Aufnahmeeinrichtung jeweils mindestens ein farbiges Bild einer Farbreferenz mit dem digitalen Mikroskop aufgenommen. Bei der Farbreferenz handelt es sich um eine Einrichtung zur normierten Farbwiedergabe, beispielsweise um ein auf einer Farbreferenzkarte angeordnetes Farbfeld. Es können auch mehrere Farbreferenzen gleichzeitig aufgenommen werden. In einem weiteren Teilschritt wird jeweils ein Satz von Korrekturwerten für jeden der mehreren Zuständen der Mikroskopbeleuchtung und ggf. für jeden der mehreren Zuständen der optischen Aufnahmeeinrichtung bestimmt, welcher die Korrektur des im jeweiligen Zustand der Mikroskopbeleuchtung und ggf. im jeweiligen Zustand der optischen Aufnahmeeinrichtung aufgenommenen Bildes zur farbgetreuen Wiedergabe der Farbreferenz beschreibt. Somit werden die Korrekturwerte unter Berücksichtigung der wellenlängenabhängigen Eigenschaften der Mikroskopbeleuchtung und ggf. der optischen Aufnahmeeinrichtung bestimmt. Jeder der Sätze der Korrekturwerte ist einem der Zustände der Mikroskopbeleuchtung und ggf. einem der Zustände der optischen Aufnahmeeinrichtung zugeordnet.

Beim Kalibrierungsvorgang werden die Bilder, d. h. die Farben der Bilder bevorzugt im RGB-Format verarbeitet.

Bei einer alternativen bevorzugten Ausführungsform erfolgt kein solcher Kalibrierungsvorgang, bei welchem die Mehrzahl an Sätzen von Korrekturwerten vorab bestimmt wird. Stattdessen wird ein Satz von Korrekturwerten während des Mikroskopierens der Probe bestimmt. Dieses Bestimmen des Satzes von Korrekturwerten erfolgt dadurch, dass dieser unter Berücksichtigung der wellenlängenabhängigen Eigenschaften der die Probe beleuchtenden Mikroskopbeleuchtung und ggf. unter Berücksichtigung der wellenlängenabhängigen Eigenschaften der die Probe aufnehmenden optischen Aufnahmeeinrichtung berechnet wird. Es erfolgt somit eine Simulation der wellenlängenabhängigen Beleuchtung und ggf. der wellenlängenabhängigen optischen Verarbeitung. Folglich wird der Satz von Korrekturwerten durch eine Simulation gewonnen. Die Korrekturwerte beschreiben die Korrektur des unter Vorherrschen der wellenlängenabhängigen Eigenschaften der die Probe beleuchtenden Mikroskopbeleuchtung und ggf. der wellenlängenabhängigen Eigenschaften der die Probe aufnehmenden optischen Aufnahmeeinrichtung aufgenommenen Bildes zur farbgetreuen Wiedergabe der Farben der Probe.

Beim Bestimmen des Satzes von Korrekturwerten während des Mikroskopierens der Probe durch Simulation werden die Farben bevorzugt jeweils durch deren Spektrum beschrieben.

Das Bestimmen des Satzes von Korrekturwerten unter Berücksichtigung der wellenlängenabhängigen Eigenschaften der die Probe beleuchtenden Mikroskopbeleuchtung und ggf. unter Berücksichtigung der wellenlängenabhängigen Eigenschaften der die Probe aufnehmenden optischen Aufnahmeeinrichtung kann statt während des Mikroskopierens auch zeitlich beabstandet vor dem Mikroskopieren erfolgen, wofür der mindestens eine Satz von Korrekturwerten vorab zu speichern ist. Dabei werden bevorzugt mehrere der Sätze von Korrekturwerten zuvor berechnet und gespeichert.

Die wellenlängenabhängigen Eigenschaften der Mikroskopbeleuchtung sind bevorzugt durch ein Spektrum der Mikroskopbeleuchtung beschrieben. Entsprechend sind ggf. auch die wellenlängenabhängigen Eigenschaften der optischen Aufnahmeeinrichtung durch mindestens ein Spektrum der optischen Aufnahmeeinrichtung beschrieben.

Die genannten Spektren sind bevorzugt jeweils durch eine Vielzahl an Stützstellen des Spektralverlaufes beschrieben, beispielsweise durch 200 Stützstellen.

In den unterschiedlichen Zuständen der Mikroskopbeleuchtung weist diese unterschiedliche wellenlängenabhängige Eigenschaften auf, insbesondere unterschiedliche Intensitäten in einzelnen Spektralbereichen. Auch weist die Mikroskopbeleuchtung in ihren mehreren Zuständen insbesondere auch unterschiedliche Werte der Beleuchtungsstärke auf. Auch weist die Mikroskopbeleuchtung in ihren mehreren Zuständen bevorzugt unterschiedliche Strahlungsrichtungen des auf die Probe geworfenen Lichtes auf.

Die optische Aufnahmeeinrichtung besitzt in ihren mehreren Zuständen bevorzugt unterschiedliche Brennweiten. Auch weist die optische Aufnahmeeinrichtung in ihren mehreren Zuständen bevorzugt unterschiedliche Konfigurationen des Objektivs auf, beispielsweise unterschiedliche Wechselobjektive. Auch weist die optische Aufnahmeeinrichtung in ihren mehreren Zuständen bevorzugt unterschiedliche Konfigurationen des Bildwandlers auf, beispielsweise unterschiedliche Austauchbildwandler.

Die an der Mikroskopbeleuchtung gewählten Einstellungen werden bevorzugt dadurch erfasst, dass das von der Mikroskopbeleuchtung abgegebene Beleuchtungslicht spektral ausgemessen wird. Hierfür wird mindestens ein wellenlängenempfindlicher Sensor genutzt, der bevorzugt durch ein Miniaturspektrometer oder durch einen Miniaturmultiwellenlängenbildsensor gebildet ist. Der wellenlängenempfindliche Sensor bzw. die mehreren wellenlängenempfindlichen Sensoren sind bevorzugt in das digitale Mikroskop integriert; beispielsweise in der Mikroskopbeleuchtung, im Objektiv oder in einem optischen Modul. Auch ist der wellenlängenempfindliche Sensor bzw. einer oder mehrere der mehreren wellenlängenempfindlichen Sensoren bevorzugt an einem Probenträger oder an einem Stativ des Mikroskops angeordnet, insbesondere um die Mikroskopbeleuchtung in Form von äußerem einwirkenden Licht, z. B. von Leuchten oder Tageslicht, messen zu können. Mithilfe des mindestens einen wellenlängenempfindlichen Sensors können die spektralen Daten des Beleuchtungslichtes auf Anforderung oder während einer Initialisierung oder während einer Kalibrierung oder zu vorbestimmten Zeitpunkten ermittelt werden, um diese zu temporär speichern; beispielsweise in einem PC oder in einem EPROM oder einem Speicher des digitalen Mikroskops oder in einem EPROM oder einem Speicher eines Objektivs. Insofern einer oder mehrere der mehreren wellenlängenempfindlichen Sensoren am Probenträger oder am Stativ des Mikroskops angeordnet sind, ermöglicht dies gemeinsam mit anderen Optionen zur Anordnung der mehreren wellenlängenempfindlichen Sensoren die Ermittlung der Korrekturwerte, auch wenn die Mikroskopbeleuchtung beispielsweise durch Tageslicht oder durch weitere auf die Probe leuchtende Lichtquellen gebildet ist. Insoweit umfassen die an der Mikroskopbeleuchtung gewählten Einstellungen auch Ausrichtungen des Mikroskops gegenüber dem Tageslicht oder den weiteren auf die Probe leuchtenden Lichtquellen. Der mindestens eine wellenlängenempfindliche Sensor wird bevorzugt zuvor kalibriert, beispielsweise mithilfe einer kalibrierten externen Lichtquelle.

Die wellenlängenabhängigen Eigenschaften der Mikroskopbeleuchtung sind bevorzugt auf einem am digitalen Mikroskop angeordneten Speicher gespeichert und abrufbar. Die wellenlängenabhängigen Eigenschaften des Objektivs sind bevorzugt auf einem am Objektiv angeordneten Speicher gespeichert, insbesondere wenn es sich bei dem Objektiv um ein Wechselobjektiv handelt. Die wellenlängenabhängigen Eigenschaften des Bildwandlers sind bevorzugt auf einem am digitalen Mikroskop angeordneten Speicher gespeichert.

Die an der Mikroskopbeleuchtung gewählten Einstellungen sind bevorzugt durch eine Einstellung der Beleuchtungsstärke, durch eine Auswahl an Einzellichtquellen, durch eine Ausrichtung der Mikroskopbeleuchtung bzw. der Einzellichtquellen, durch eine Einstellung einer Beleuchtungsblende und/oder durch eine Auswahl der Belichtungsart, wie Dunkel- oder Hellfeldbeleuchtung gebildet. Die an der Mikroskopbeleuchtung gewählten Einstellungen können alternativ bevorzugt dadurch erfasst werden, dass Einstellelemente zum Einstellen der Mikroskopbeleuchtung ausgelesen werden, d. h. dass diese Einstellelemente unmittelbar auch zum Erfassen der an der Mikroskopbeleuchtung gewählten Einstellungen dienen. Diese Ausführungsformen weisen den Vorteil auf, dass die Mikroskopbeleuchtung bei der Aufnahme der zu mikroskopierenden Probe nicht vermessen werden muss.

Die an der optischen Aufnahmeeinrichtung gewählten Einstellungen sind bevorzugt durch eine Auswahl eines Wechselobjektivs, durch eine Auswahl eines Austauschbildwandlers, durch eine Einstellung einer Aufnahmeblende und/oder durch eine Einstellung einer Brennweite gebildet.

Das erfindungsgemäße digitale Mikroskop umfasst zumindest eine optische Aufnahmeeinrichtung, eine Mikroskopbeleuchtung und eine Bildverarbeitungseinheit, welche zur Ausführung des erfindungsgemäßen Verfahrens konfiguriert ist. Die Bildverarbeitungseinheit ist bevorzugt zur Ausführung bevorzugter Ausführungsformen des erfindungsgemäßen Verfahrens konfiguriert. Im Übrigen zeigt das erfindungsgemäße digitale Mikroskop auch solche Merkmale, die im Zusammenhang mit dem erfindungsgemäßen Verfahren und dessen bevorzugten Ausführungsformen beschrieben sind. Insbesondere umfasst das digitale Mikroskop bevorzugt einen wellenlängenempfindlichen Sensor zum spektralen Ausmessen des von der Mikroskopbeleuchtung abgegebenen Beleuchtungslichtes.

Weitere Vorteile, Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:

Fig. 1: eine Darstellung des Prinzips zur Bestimmung von Korrekturwerten gemäß einer ersten bevorzugten Ausführungsform des erfindungsgemäßen Verfahrens;

Fig. 2: eine Darstellung des Prinzips zur Bestimmung von Korrekturwerten gemäß einer zweiten bevorzugten Ausführungsform des erfindungsgemäßen Verfahrens;

Fig. 3: ein Flussdiagramm einer erfindungsgemäßen Korrekturwertermittlung entsprechend einer allgemeinen Ausführungsform;

Fig. 4: ein Flussdiagramm der erfindungsgemäßen Korrekturwertermittlung entsprechend einer typischen Ausführungsform; und

Fig. 5:     ein Flussdiagramm der erfindungsgemäßen Korrekturwertermittlung entsprechend einer weiteren typischen Ausführungsform.

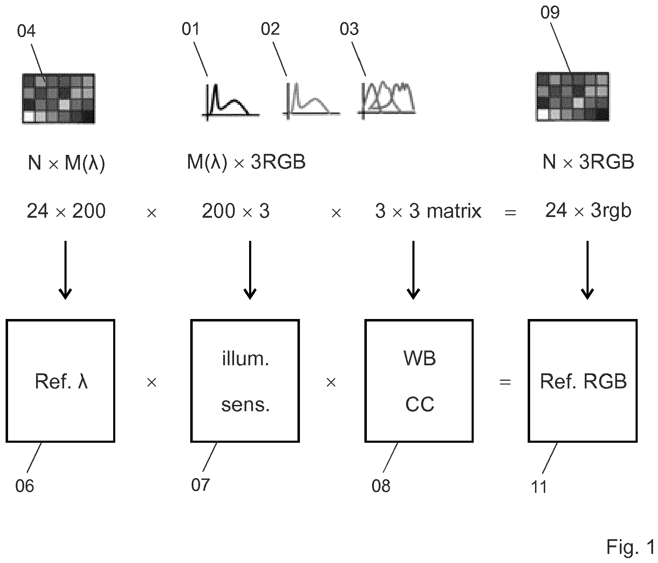

Fig. 1 zeigt eine Darstellung des Prinzips zur Bestimmung von Korrekturwerten gemäß einer ersten bevorzugten Ausführungsform des erfindungsgemäßen Verfahrens.

Bei einem digitalen Mikroskop sind verschiedene Einstellungen und Konfigurationen veränderbar. Beispielsweise kann eine Dunkelfeldbeleuchtung oder eine Hellfeldbeleuchtung gewählt werden, was jeweils durch ein Spektrum 01 einer Dunkelfeldbeleuchtung und durch ein Spektrum 02 einer Hellfeldbeleuchtung symbolisiert ist. Weiterhin kann der Spektralbereich verändert werden, beispielsweise im sichtbaren Wellenlängenbereich oder im nahen IR-Bereich, was u. a. durch unterschiedliche Lichtquellen, wie eine weißleuchtende LED oder eine Xenon-Lampe verursacht sein kann. Zudem können die spektralen Eigenschaften von Transmission und/oder Reflexion durch die optischen Elemente bzw. die Optik des digitalen Mikroskops verändert werden. Auch kann die spektrale Empfindlichkeit des Bildwandlers, d. h. des Sensors verändert werden. Die spektralen Eigenschaften der Optik und des Bildsensors sind durch Spektren 03 symbolisiert.

Die Spektren 01, 02, 03 sind in dem gezeigten Beispiel durch jeweils 200 Stützstellen beschrieben.

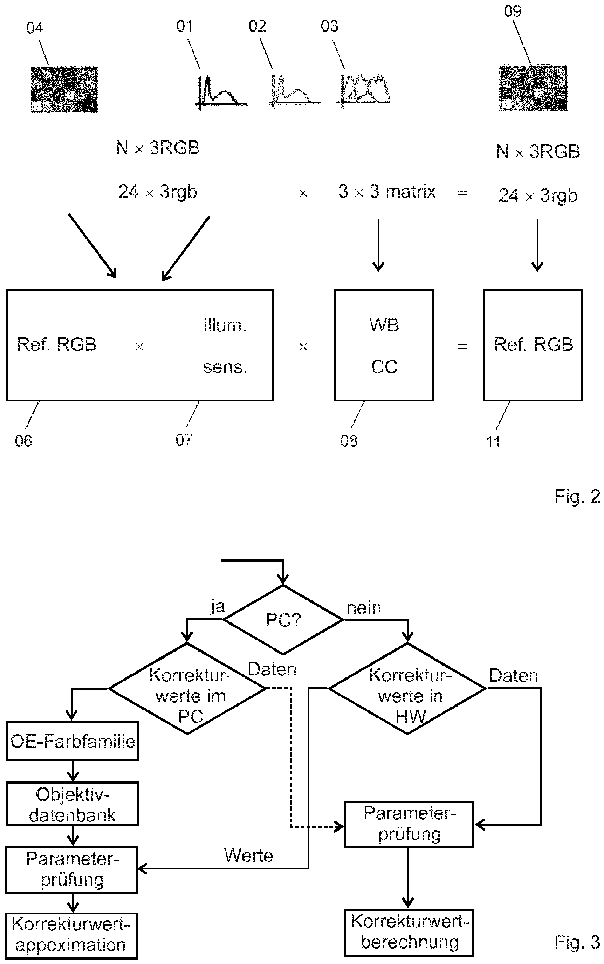

Das erfindungsgemäße Verfahren nutzt eine Farbreferenz 04, die physisch in Form z. B. einer Farbreferenztafel vorhanden sein kann und mit dem digitalen Mikroskop aufgenommen wird (vgl. Fig. 2) oder die wie bei der gezeigten Ausführungsform simuliert wird. Beispielsweise können N = 24 Referenzfarben verwendet werden. Im Falle der beispielhaft gezeigten Simulation werden diese N = 24 Farben jeweils als ein Spektrum mit beispielsweise M = 200 Stützstellen dargestellt. Alternativ kann auch eine reduzierte Anzahl von beispielsweise N = 3 mit M = 3 gewählt werden; z. B. drei Werte für RGB. Die Referenzfarben sind durch ein erstes Feld 06 symbolisiert.

Die spektralen Eigenschaften 01, 02, 03 der Beleuchtung, der Optik und des Bildsensors sind durch ein zweites Feld 07 symbolisiert. Diese spektralen Eigenschaften 01, 02, 03 bestimmen, wie die unkorrigierten Farben der Farbreferenz 04 dargestellt werden und somit eine Verfälschung erleiden. Es bedarf einer Farbkorrektur CC, welche einen Weißabgleich WB beinhaltet, um die verfälschten Farben zu korrigieren, was durch ein drittes Feld 08 symbolisiert ist. Im Ergebnis liegen die korrigierten Farben 09 der Farbreferenz vor, was durch ein viertes Feld 11 symbolisiert ist.

Erfindungsgemäß werden die durch das dritte Feld 08 symbolisierten Korrekturwerte ermittelt, um sie anschließend zur Farbkorrektur von aufgenommenen Bildern von Proben zu verwenden.

Da die durch das zweite Feld 07 symbolisierten spektralen Eigenschaften 01, 02, 03 der Beleuchtung, der Optik und des Sensors bekannt sind, können bei der gezeigten Ausführungsform die durch das dritte Feld 08 symbolisierten Korrekturwerte vollständig mathematisch bestimmt werden, was einer Simulation des digitalen Mikroskops entspricht.

Das Bestimmen der durch das dritte Feld 08 symbolisierten Korrekturwerte kann auch in zwei oder mehrere Schritte aufgeteilt werden, wenn ein Zwischenschritt mit Zwischenreferenzdaten benötigt wird. Solche Zwischenreferenzdaten können durch zusätzliche Anforderungen definiert sein, um auf unterschiedliche Farbräume, wie z. B. CIE 1931 XYZ zurückgreifen zu können.

Das vollständig mathematische Bestimmen der durch das dritte Feld 08 symbolisierten Korrekturwerte unter Berücksichtigung der spektralen Eigenschaften 01, 02, 03 der Beleuchtung, der Optik und des Sensors kann als eine Live-Lösung durchgeführt werden, da während des Mikroskopierens jede Änderung einer spektralen Eigenschaft, beispielsweise durch Änderung der Beleuchtungsstärke, zu einer vollständigen Neuberechnung der Korrekturwerte führt. Allerdings kann diese Ausführungsform auch zeitlich beabstandet vor dem Mikroskopieren durchgeführt werden, wofür die ermittelten Korrekturwerte entsprechend zu speichern sind. Die Berechnung der Korrekturwerte kann durch Software erfolgen, welche beispielsweise auf einem PC, auf einem Tabletcomputer oder auf einem Smartphone abläuft. Auch kann die Berechnung der Korrekturwerte durch Hardware realisiert sein, beispielsweise durch bestimmte Algorithmen in einer Feld-programmierbaren Gatter-Anordnung (FPGA) oder in einem Media-Prozessor.

Fig. 2 zeigt eine Darstellung des Prinzips zur Bestimmung von Korrekturwerten gemäß einer zweiten bevorzugten Ausführungsform des erfindungsgemäßen Verfahrens.

Bei dieser Ausführungsform wird die Farbreferenz 04 physisch in Form einer Farbreferenztafel genutzt, welche mit dem digitalen Mikroskop aufgenommen wird. Auch hier werden beispielhaft N = 24 Referenzfarben verwendet, sodass N = 24 RGB-Farbwerte der 24 aufgenommenen Referenzfarben der Farbreferenztafel 04 vorliegen. Bei den aufgenommenen Referenzfarben handelt es sich um die durch das erste Feld 06 symbolisierten Referenzfarben, auf welche die durch das zweite Feld 07 symbolisierten spektralen Eigenschaften 01, 02, 03 der Beleuchtung, der Optik und des Sensors gewirkt haben, was durch ein gemeinsames Feld 06, 07 symbolisiert ist.

Die gezeigte Ausführungsform stellt eine Kalibrierung dar, bei welcher die Farbreferenztafel 04 mit dem digitalen Mikroskop aufgenommen wird und die am digitalen Mikroskop vorgenommenen Einstellungen, welche die spektralen Eigenschaften 01, 02, 03 der Beleuchtung, der Optik und des Sensors bestimmen, erfasst werden. Durch variierende Einstellungen entstehen unterschiedliche spektrale Eigenschaften 01, 02, 03, d. h. unterschiedliche Zustände des digitalen Mikroskops, wobei jedem Zustand ein Satz der Korrekturwerte, d. h. eine Korrekturmatrix zugeordnet ist. Ergänzend können unbunte Farbreferenzen zur Bestimmung von Korrekturwerten für den Weißabgleich genutzt werden.

Das Bestimmen der Korrekturwerte kann unter Nutzung der Methode der kleinsten Quadrate erfolgen, wobei eine Optimierung für alle Referenzfarben bei gleicher Wichtung möglich ist. Alternativ kann die Methode der kleinsten Quadrate unter Gewährleistung weißer Farbpunkte angewendet werden, d. h. es erfolgt eine Optimierung für alle Referenzfarben, wobei die unbunten Referenzfarben höher gewichtet werden. Alternativ können auch andere Wichtungen vorgenommen werden.

Vor der Anwendung des digitalen Mikroskops liegt somit eine Mehrzahl an Sätzen von Korrekturwerten vor, die jeweils einem Zustand des digitalen Mikroskops zugeordnet sind. Während des Mikroskopierens kann auf die zuvor bestimmten Sätze von Korrekturwerten zurückgegriffen werden, wobei jedoch bevorzugt eine parameterspezifische Interpolation durchgeführt wird, da die zuvor bestimmten Sätze von Korrekturwerten nur einer begrenzten Auswahl an möglichen Zuständen des digitalen Mikroskops zugeordnet sind. In einem einfachen Fall ist beispielsweise betreffend die Beleuchtungsstärke nur für die beiden Extrema der minimalen und der maximalen Beleuchtungsstärke jeweils ein Satz an Korrekturwerten zuvor bestimmt worden. Die am digitalen Mikroskop eingestellte Beleuchtungsstärke liegt in den meisten Fällen zwischen diesen beiden Extrema, sodass zwischen den Korrekturwerten der beiden zuvor bestimmten Sätze zu interpolieren ist.

Die die Eigenschaften der Komponenten des digitalen Mikroskops repräsentierenden Parameter, wie z. B. Seriennummer, Referenzangaben, Beleuchtung und Spektrum können auf unterschiedliche Weise gespeichert werden. Eine erste Möglichkeit ist die Speicherung dieser Parameter in einem PC, in einem Tabletcomputer oder in einem Smartphone. Alternativ können diese Daten an einem zentralen Ort gespeichert sein. Eine weitere bevorzugte Möglichkeit ist die Speicherung dieser Parameter in der Hardware der jeweiligen Komponente. Die Speicherung der die Eigenschaften der Komponenten des digitalen Mikroskops repräsentierenden Parameter ermöglicht spezifische Farbmanagement-Algorithmen zur Anwendung der benötigten Parameter im Bedarfsfall. Hierdurch kann eine konstante Farbqualität der aufgenommenen Bilder unabhängig von der jeweils ausgewählten Komponente gewährleistet werden. Unterschiedliche Komponenten, wie beispielsweise unterschiedliche Lichtquellen der Mikroskopbeleuchtung oder verschiedene Austauschobjektive führen zu völlig unterschiedlichen Eigenschaften, was durch ein Auslesen der jeweiligen Parameter und Verwenden dieser Parameter berücksichtigt wird. Unterschiedliche Mikroskopbeleuchtungen können zu völlig unterschiedlichen Spektren führen. Beispielsweise können Spektren und Farbkorrekturwerte einer in einem Objektiv angeordneten Dunkelfeldbeleuchtungsquelle in einem Speicherelement im Wechselobjektiv gespeichert werden. Beispielsweise können Spektren und Farbkorrekturwerte einer Hellfeldbeleuchtungsquelle gemeinsam mit spektralen Eigenschaften des Sensors in einem Speicherelement im digitalen Mikroskop gespeichert werden.

Fig. 3 zeigt ein Flussdiagramm einer Korrekturwertermittlung gemäß einer allgemeinen Ausführungsform des erfindungsgemäßen Verfahrens. Die Berechnungen werden auf einem PC durchgeführt, welcher eine Bildverarbeitungseinheit des digitalen Mikroskops bildet. Zunächst wird geprüft, ob die benötigten Parameter bzw. Korrekturwerte im PC gespeichert sind. Falls ja, werden die Korrekturwerte für die Farbkorrektur bzw. die Parameter, wie z. B. Spektren ausgelesen. Diese sind bezogen auf eine Farbfamilie der gewählten Optical Engine OE. Die Optical Engine beschreibt die optische Aufnahme durch das digitale Mikroskop in dessen aktuellen Zustand. Die Optical Engine beschreibt insbesondere die Eigenschaften der Mikroskopbeleuchtung und des Bildsensors. Die Farbfamilie ist eine Auswahl der möglichen Farben. Weiterhin werden Parameter des ausgewählten Objektivs aus einer Objektivdatenbank ausgelesen. Die Korrekturwerte für die Farbkorrektur bzw. die Parameter werden überprüft durch einen Vergleich mit Korrekturwerten und Parametern, die in einem in den Hardware-Komponenten HW des digitalen Mikroskops abgeordneten Speicher gespeichert sind. Anschließend erfolgt eine Approximation der Korrekturwerte, beispielsweise durch eine Interpolation der ausgelesenen Korrekturwerte. Falls die benötigten Parameter bzw. Korrekturwerte nicht im PC gespeichert sind, werden sie unter Nutzung der in den Hardware-Komponenten HW gespeicherten Parameter durch eine Simulation berechnet.

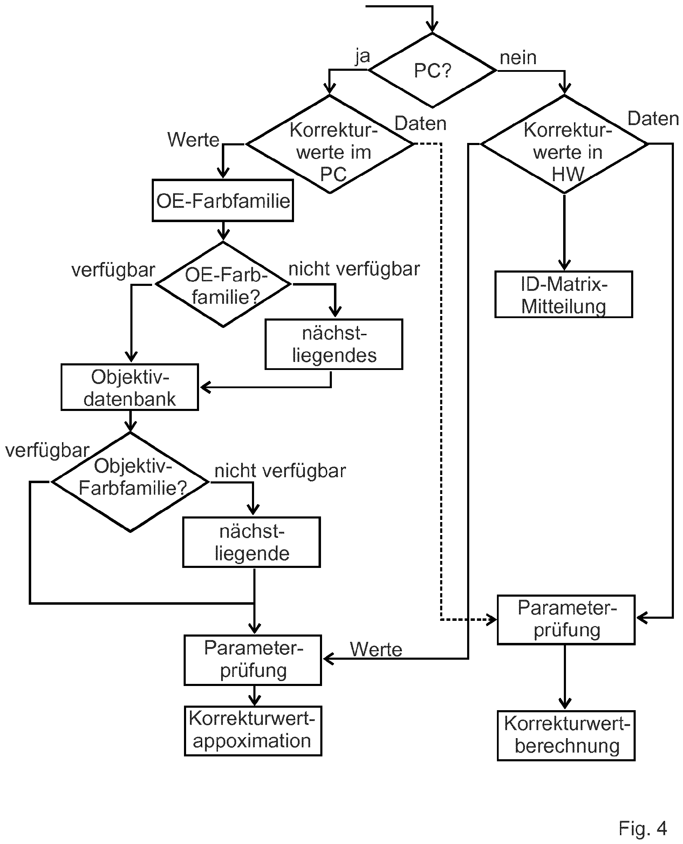

Fig. 4 zeigt ein Flussdiagramm der Korrekturwertermittlung gemäß einer typischen Ausführungsform des erfindungsgemäßen Verfahrens. Der Ablauf gleicht zunächst dem in Fig. 1 gezeigten Ablauf. Jedoch wird hier davon ausgegangen, dass nicht alle benötigten Parameter verfügbar sind. Entsprechend gibt es Abfragen, ob die entsprechenden Farbfamilien der Optical Engine und des Objektivs verfügbar sind. Im Falle der Nichtverfügbarkeit wird auf die jeweils nächstliegende Farbfamilie zurückgegriffen.

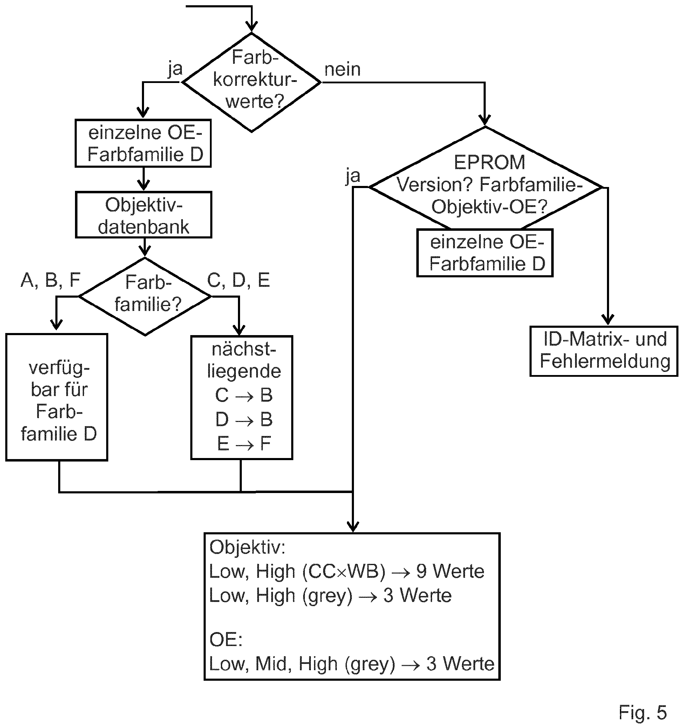

Fig. 5 zeigt ein Flussdiagramm der Korrekturwertermittlung gemäß einer weiteren typischen Ausführungsform des erfindungsgemäßen Verfahrens. Im Unterschied zu den in Fig. 1 und Fig. 3 gezeigten Abläufen werden beispielhaft eine einzige Farbfamilie D für die Optical Engine und drei Farbfamilien A, B, F für das Objektiv bestimmt. Die einzige Farbfamilie D für die Optical Engine ist beispielhaft auf eine bestimmte Hellfeldbeleuchtung und auf eine bestimmte Empfindlichkeit des Bildsensors bezogen. Informationen über die Farbfamilien und über die Farbkorrekturwerte sind in einer Datenbank auf dem PC gespeichert. Weiterhin sind diese Daten in einem Speicher EPROM in den Komponenten des digitalen Mikroskops gespeichert. Die benötigten Werte werden zuerst auf dem PC gesucht. Falls diese nicht gespeichert sind, werden die Werte der nächstliegenden Farbfamilien gesucht. Wenn auch diese nicht gespeichert sind, werden die benötigten Daten in dem in den Komponenten des digitalen Mikroskops angeordneten Speicher gesucht. Wenn sie auch dort nicht gespeichert sind, wird eine den Zustand identifizierende Matrix verwendet und es wird eine Meldung über die fehlenden Farbkorrekturwerte ausgegeben.

Wie bereits oben erläutert können die benötigten Farbkorrekturwerte durch Interpolation gewonnen werden. Hierfür können in Abhängigkeit von den aktuellen Parametern unterschiedliche Interpolationsalgorithmen zur Anwendung kommen.

Beispielsweise kann zwischen zwei Intensitätswerten interpoliert werden. Im Falle einer angenommenen linearen Interpolation zwischen zwei Parametern *par.min* und *par.max* ergibt sich folgende Gleichung für das i-te Element $CC_i^{par.X}$ der Farbkorrekturmatrix bzw. der Weißabgleichmatrix:

$$CC_i^{par.X} = CC_i^{par.\min} + par.X * \frac{CC_i^{par.\max} - CC_i^{par.\min}}{par.max - par.min}$$

Diese Gleichung kann für eine höhere Ordnung oder für nichtlineare Interpolation entsprechend erweitert werden.

Beispielsweise kann zwischen zwei Beleuchtungsarten einer gemischten Beleuchtung interpoliert werden. Im Falle einer angenommenen linearen Interpolation zwischen einer Intensität einer Hellfeldbeleuchtung $I_{BF}$ und einer Intensität einer Dunkelfeldbeleuchtung $I_{DF}$ ergibt sich folgende Gleichung für das i-te Element $CC_i^{I_{DF} I_{BF}}$ der Farbkorrekturmatrix bzw. der Weißabgleichmatrix:

$$CC_i^{I_{DF} I_{BF}} = a * CC_i^{I_{DF}} + CC_i^{I_{BF}} ,$$

wobei $CC_i^{I_{DF}}$ und $CC_i^{I_{BF}}$ das i-te Element der Matrix einer ausschließlichen Dunkelfeldbeleuchtung bzw. einer ausschließlichen Hellfeldbeleuchtung sind und wobei *a* ein Normalisierungsparameter für die absolute maximale Intensität der einzelnen Beleuchtungen ist, z. B. $a = I_{DF.max}/I_{BF.max}$.

Im Weiteren kann auch eine kombinierte Interpolation zwischen Intensitäten und Beleuchtungsarten vorgenommen werden.

Wie oben erläutert können verschiedene Eigenschaften des digitalen Mikroskops durch Spektren beschrieben werden. Die Spektralverläufe können durch eine komplexe Spektralkurve mit mindestens zwei Gaußglocken parametrisiert werden. Hierdurch wird die benötigte Datenmenge reduziert und eine erhöhte Flexibilität bei der Interpolation der Farbkorrekturwerte zwischen den verschiedenen Parameter-spezifischen Lösungen ermöglicht. In diesem Fall wird die Interpolation für die durch die Spektrenparametrisierung erhaltenen Werte durchgeführt.

## Bezugszeichenliste

01     Spektrum einer Dunkelfeldbeleuchtung
02     Spektrum einer Hellfeldbeleuchtung
03     Spektrum einer Optik und eines Bildwandlers
04     Farbreferenzwerte
05     -
06     Referenzfarben
07     spektrale Eigenschaften der Optik und des Sensors
08     Korrekturfaktoren
09     korrigierte Farben
10     -
11     korrigierte Farbwerte

**Patentansprüche**

1.  Verfahren zum Korrigieren von Farben einer Farbwiedergabe eines digitalen Mikroskops, folgende Schritte umfassend:

    - Aufnehmen eines farbigen Bildes einer zu mikroskopierenden Probe, wobei wellenlängenabhängige Eigenschaften (01; 02) einer die Probe beleuchtenden Mikroskopbeleuchtung zur Beschreibung eines Zustandes der Mikroskopbeleuchtung ermittelt werden, indem an der Mikroskopbeleuchtung gewählte Einstellungen erfasst werden, wobei die wellenlängenabhängigen Eigenschaften der Mikroskopbeleuchtung durch ein Spektrum (01; 02) der Mikroskopbeleuchtung beschrieben sind, und wobei beim Aufnehmen des farbigen Bildes der zu mikroskopierenden Probe weiterhin wellenlängenabhängige Eigenschaften (03) einer eine Optik und einen Bildwandler umfassenden optischen Aufnahmeeinrichtung des Mikroskops zur Beschreibung eines Zustandes der optischen Aufnahmeeinrichtung ermittelt werden, indem an der optischen Aufnahmeeinrichtung gewählte Einstellungen erfasst werden;
    - Bestimmen eines Satzes von Korrekturwerten (08), welcher einem Zustand der Mikroskopbeleuchtung und einem Zustand der optischen Aufnahmeeinrichtung zugeordnet ist, wobei der dem zu bestimmenden Satz der Korrekturwerte (08) zugeordnete Zustand der Mikroskopbeleuchtung entsprechend dem ermittelten Zustand der Mikroskopbeleuchtung gewählt wird, und wobei der dem zu bestimmenden Satz der Korrekturwerte (08) zugeordnete Zustand der optischen Aufnahmeeinrichtung entsprechend dem ermittelten Zustand der optischen Aufnahmeeinrichtung gewählt wird; und
    - Korrigieren der Farben des aufgenommenen farbigen Bildes durch Anwenden der Korrekturwerte (08) des zuvor bestimmten Satzes;

    dadurch gekennzeichnet, dass die an der Mikroskopbeleuchtung gewählten Einstellungen Parametereinstellungen und/oder eine Auswahl von Konfigurationen umfassen, und dass die an der optischen Aufnahmeeinrichtung gewählten Einstellungen Parametereinstellungen und/oder Konfigurationen der Optik umfassen, wobei die Einstellungen der Mikroskopbeleuchtung in einem oder mehreren Speichern gespeichert sind, sodass das Erfassen der Einstellungen ein Auslesen des Speichers umfasst.

2.  Verfahren nach Anspruch 1, dadurch gekennzeichnet, dass das Bestimmen eines Satzes von Korrekturwerten (08) einen Teilschritt umfasst, bei welchem mindestens ein Satz von Korrekturwerten (08) aus einer Mehrzahl an gespeicherten und unterschiedlichen Zuständen der optischen Mikroskopbeleuchtung zugeordneten Sätzen von Korrekturwerten ausgewählt wird, wobei der dem ausgewählten Satz von Korrekturwerten (08) zugeordnete Zustand der Mikroskopbeleuchtung dem ermittelten Zustand der Mikroskopbeleuchtung am nächsten kommt.

3.  Verfahren nach Anspruch 2, dadurch gekennzeichnet, dass mindestens zwei der Sätze von Korrekturwerten (08) aus einer Mehrzahl an gespeicherten und unterschiedlichen Zuständen der Mikroskopbeleuchtung zugeordneten Sätzen von Korrekturwerten ausgewählt werden, wobei das Bestimmen eines Satzes von Korrekturwerten (08) weiterhin einen Teilschritt umfasst, bei welchem die Korrekturwerte der beiden ausgewählten Sätze interpoliert werden.

4.  Verfahren nach Anspruch 2, dadurch gekennzeichnet, dass die gespeicherten und unterschiedlichen Zuständen der Mikroskopbeleuchtung und unterschiedlichen Zuständen der optischen Aufnahmeeinrichtung zugeordneten Sätze von Korrekturwerten (08) durch folgende Teilschritte ermittelt werden:

    - Erfassen der wellenlängenabhängigen Eigenschaften (01; 02) der Mikroskopbeleuchtung in den mehreren Zuständen der Mikroskopbeleuchtung unter Zuordnung der an der Mikroskopbeleuchtung gewählten Einstellungen;
    - Erfassen der wellenlängenabhängigen Eigenschaften (03) der optischen Aufnahmeeinrichtung in den mehreren Zuständen der optischen Aufnahmeeinrichtung unter Zuordnung der an der optischen Aufnahmeeinrichtung gewählten Einstellungen;
    - Aufnehmen jeweils eines farbigen Bildes einer Farbreferenz mit dem digitalen Mikroskop in jedem der mehreren Zustände der Mikroskopbeleuchtung und in jedem der mehreren Zustände der optischen Aufnahmeeinrichtung; und
    - Bestimmen jeweils eines Satzes von Korrekturwerten (08) für jeden der mehreren Zustände der Mikroskopbeleuchtung und für jeden der mehreren Zustände der optischen Aufnahmeeinrichtung, welcher die Korrektur des in dem jeweiligen Zustand der Mikroskopbeleuchtung und im jeweiligen Zustand der optischen Aufnahmeeinrichtung aufgenommenen Bildes zur farbgetreuen Wiedergabe der Farbreferenz beschreiben.

**5.** Verfahren nach einem der Ansprüche 1 bis 4, **dadurch gekennzeichnet, dass** die an der Mikroskopbeleuchtung gewählten Einstellungen dadurch erfasst werden, dass das von der Mikroskopbeleuchtung abgegebene Beleuchtungslicht mit einem wellenlängenempfindlichen Sensor spektral ausgemessen wird.

**6.** Verfahren nach einem der Ansprüche 1-5, **dadurch gekennzeichnet, dass** die wellenlängenabhängigen Eigenschaften der optischen Aufnahmeinrichtung durch mindestens ein Spektrum (03) der optischen Aufnahmeinrichtung beschrieben sind.

**7.** Digitales Mikroskop, umfassend eine optische Aufnahmeinrichtung, eine Mikroskopbeleuchtung und eine Bildverarbeitungseinheit, welche zur Ausführung des Verfahrens nach einem der Ansprüche 1 bis 6 konfiguriert ist.

**Claims**

**1.** Method for correcting colours of a colour reproduction by a digital microscope, comprising the following steps:

- recording a colour image of a sample to be examined by microscopy, wherein wavelength-dependent properties (01; 02) of a microscopy illumination illuminating the sample are ascertained for the purpose of describing a state of the microscope illumination by virtue of settings chosen on the microscopy illumination being detected, wherein the wavelength-dependent properties of the microscope illumination are described by a spectrum (01; 02) of the microscope illumination, and wherein, when recording the colour image of the sample to be examined by microscopy, wavelength-dependent properties (03) of an optical recording device, comprising an optical unit and an image converter, of the microscope are also ascertained for the purpose of describing a state of the optical recording device by virtue of settings chosen on the optical recording device being detected;
- determining a set of correction values (08) which is assigned to a state of the microscope illumination and a state of the optical recording device, wherein the state of the microscope illumination assigned to the set of correction values (08) to be determined is chosen in accordance with the ascertained state of the microscope illumination, and wherein the state of the optical recording device assigned to the set of correction values (08) to be determined is chosen in accordance with the ascertained state of the optical recording device; and
- correcting the colours of the recorded colour image by applying the correction values (08) of the previously determined set;

**characterized in that** the settings chosen on the microscope illumination comprise parameter settings and/or a selection of configurations, and **in that** the settings chosen on the optical recording device comprise parameter settings and/or configurations of the optical unit, wherein the settings of the microscope illumination are stored in one or more memories such that the detection of the settings comprises a readout of the memory.

**2.** Method according to Claim 1, **characterized in that** the determination of a set of correction values (08) comprises a partial step in which at least one set of correction values (08) is selected from a plurality of sets of correction values assigned to stored and different states of the optical microscope illumination, wherein the state of the microscope illumination assigned to the selected set of correction values (08) comes closest to the ascertained state of the microscope illumination.

**3.** Method according to Claim 2, **characterized in that** at least two of the sets of correction values (08) are selected from a plurality of sets of correction values assigned to stored and different states of the microscope illumination, wherein the determination of a set of correction values (08) also comprises a partial step in which the correction values of the two selected sets are interpolated.

**4.** Method according to Claim 2, **characterized in that** the sets of correction values (08) assigned to stored and different states of the microscope illumination and different states of the optical recording device are ascertained by the following partial steps:

- detecting the wavelength-dependent properties (01; 02) of the microscope illumination in the plurality of states of the microscope illumination while assigning the settings chosen on the microscope illumination;
- detecting the wavelength-dependent properties (03) of the optical recording device in the plurality of states of the optical recording device while assigning the settings chosen on the optical recording device;
- recording a respective colour image of a colour reference using the digital microscope in each of the plurality of states of the microscope illumination and in each of the plurality of states of the optical recording device; and

- determining a respective set of correction values (08) for each of the plurality of states of the microscope illumination and for each of the plurality of states of the optical recording device, said set of correction values describing the correction of the image recorded in the respective state of the microscope illumination and in the respective state of the optical recording device, for the true-colour reproduction of the colour reference.

5. Method according to any of Claims 1 to 4, **characterized in that** the settings chosen on the microscope illumination are detected by virtue of the illumination light emitted by the microscope illumination being spectrally measured using a wavelength-sensitive sensor.

6. Method according to any of Claims 1-5, **characterized in that** the wavelength-dependent properties of the optical recording device are described by at least one spectrum (03) of the optical recording device.

7. Digital microscope, comprising an optical recording device, a microscope illumination and an image processing unit configured to carry out the method according to any of Claims 1 to 6.

## Revendications

1. Procédé de correction de couleurs d'une reproduction en couleur d'un microscope numérique, ledit procédé comprenant les étapes suivantes :

   - acquérir une image en couleur d'un échantillon à examiner au microscope, des propriétés (01 ; 02), dépendant de la longueur d'onde, d'un éclairage du microscope éclairant l'échantillon étant déterminées pour décrire un état de l'éclairage du microscope en ce que des réglages sélectionnés sont acquis au niveau de l'éclairage du microscope, les propriétés de l'éclairage du microscope qui dépendent de la longueur d'onde étant décrites par un spectre (01 ; 02) de l'éclairage du microscope et, lors de l'acquisition de l'image en couleur de l'échantillon à examiner au microscope, des propriétés (03), dépendant de la longueur d'onde, d'un dispositif d'acquisition optique du microscope comprenant une optique et un convertisseur d'image étant en outre déterminées pour décrire un état du dispositif d'acquisition optique en ce que des réglages sélectionnés sont acquis au niveau du dispositif d'acquisition optique ;
   - déterminer un ensemble de valeurs de correction (08) qui est associé à un état de l'éclairage du microscope et à un état du dispositif d'acquisition optique, l'état de l'éclairage du microscope, associé à l'ensemble à déterminer des valeurs de correction (08) étant sélectionné en fonction de l'état déterminé de l'éclairage du microscope, et l'état du dispositif d'acquisition optique, associé à l'ensemble à déterminer des valeurs de correction (08) étant sélectionné en fonction de l'état déterminé du dispositif d'acquisition optique ; et
   - corriger les couleurs de l'image en couleur acquise par application des valeurs de correction (08) de l'ensemble préalablement déterminé ;

   **caractérisé en ce que** les réglages sélectionnés au niveau de l'éclairage du microscope comprennent des réglages de paramètres et/ou une sélection de configurations, et **en ce que** les réglages sélectionnés au niveau du dispositif d'acquisition optique comprennent des réglages de paramètres et/ou des configurations de l'optique, les réglages de l'éclairage du microscope étant mémorisés dans une ou plusieurs mémoires de sorte que l'acquisition des réglages comprenne la lecture de la mémoire.

2. Procédé selon la revendication 1, **caractérisé en ce que** la détermination d'un ensemble de valeurs de correction (08) comprend une sous-étape dans laquelle au moins un ensemble de valeurs de correction (08) est sélectionné parmi une pluralité d'ensembles de valeurs de correction mémorisés et associés à différents états de l'éclairage du microscope optique, l'état de l'éclairage du microscope, associé à l'ensemble sélectionné de valeurs de correction (08) se rapprochant le plus de l'état déterminé de l'éclairage du microscope.

3. Procédé selon la revendication 2, **caractérisé en ce qu'**au moins deux des ensembles de valeurs de correction (08) sont sélectionnés parmi une pluralité d'ensembles de valeurs de correction mémorisés et associés à différents états de l'éclairage du microscope, la détermination d'un ensemble de valeurs de correction (08) comprenant en outre une sous-étape dans laquelle les valeurs de correction des deux ensembles sélectionnés sont interpolées.

4. Procédé selon la revendication 2, **caractérisé en ce que** des ensembles de valeurs de correction (08), associés à des états mémorisés et différents de l'éclairage du microscope et à des différents états du dispositif d'acquisition optique peuvent être déterminés par les sous-étapes suivantes :

- acquérir les propriétés (01 ; 02), dépendant de la longueur d'onde, de l'éclairage du microscope dans les plusieurs états de l'éclairage du microscope par association des réglages sélectionnés au niveau de l'éclairage du microscope ;
- acquérir les propriétés (03), dépendant de la longueur d'onde, du dispositif d'acquisition optique dans les plusieurs états du dispositif d'acquisition optique par association des réglages sélectionnés au niveau du dispositif d'acquisition optique ;
- acquérir une image en couleur d'une référence de couleur avec le microscope numérique dans chacun des plusieurs états de l'éclairage du microscope et dans chacun des plusieurs états du dispositif d'acquisition optique ; et
- déterminer à chaque fois pour chacun des plusieurs états de l'éclairage du microscope et pour chacun des plusieurs états du dispositif d'acquisition optique un ensemble de valeurs de correction (08) qui décrit la correction de l'image acquise dans l'état respectif de l'éclairage du microscope et dans l'état respectif du dispositif d'acquisition optique pour reproduire la référence de couleur avec fidélité des couleurs.

5. Procédé selon l'une des revendications 1 à 4, **caractérisé en ce que** les réglages sélectionnés au niveau de l'éclairage du microscope sont acquis du fait que la lumière d'éclairage émise par l'éclairage du microscope est mesurée spectralement à l'aide d'un capteur sensible à la longueur d'onde.

6. Procédé selon l'une des revendications 1 à 5, **caractérisé en ce que** les propriétés, dépendant de la longueur d'onde, du dispositif d'acquisition optique sont décrites par au moins un spectre (03) du dispositif d'acquisition optique.

7. Microscope numérique qui comprend un dispositif d'acquisition optique, un éclairage du microscope et une unité de traitement d'image et qui est configuré pour mettre en œuvre le procédé selon l'une des revendications 1 à 6.

Fig. 1

N × 3RGB    N × 3RGB

24 × 3rgb    ×    3 × 3 matrix    =    24 × 3rgb

| Ref. RGB × | illum. | × | WB | = | Ref. RGB |
|---|---|---|---|---|---|
| | sens. | | CC | | |

06    07    08    11

Fig. 2

Fig. 3

```
                            ja        PC?      nein
                                  ◇

              Werte   Korrektur-   Daten        Korrektur-   Daten
                      werte im                  werte in
                      PC                         HW

         OE-Farbfamilie

                                                ID-Matrix-
                                                Mitteilung
   verfügbar    OE-Farb-    nicht verfügbar
                familie?

                                nächst-
                                liegendes

         Objektiv-
         datenbank

   verfügbar    Objektiv-    nicht verfügbar
                Farbfamilie?

                                nächst-
                                liegende

                                                 Parameter-
                                                 prüfung

              Parameter-   Werte
              prüfung

              Korrekturwert-                  Korrekturwert-
              appoximation                    berechnung
```

Fig. 4

Farb-korrektur-werte?

ja

nein

einzelne OE-Farbfamilie D

Objektiv-datenbank

A, B, F

Farb-familie?

C, D, E

verfüg-bar für Farb-familie D

nächst-liegende
C → B
D → B
E → F

ja

EPROM Version? Farbfamilie-Objektiv-OE?

einzelne OE-Farbfamilie D

ID-Matrix- und Fehlermeldung

Objektiv:
Low, High (CC×WB) → 9 Werte
Low, High (grey) → 3 Werte

OE:
Low, Mid, High (grey) → 3 Werte

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130044200 A1
- US 8238534 B2
- US 20140055592 A1
- JP 4311945 B
- JP 4217494 B
- EP 2204980 B1

- US 20120050727 A1
- US 20110249155 A1
- US 20080018735 A1
- DE 102005031104 A1
- US 20090141127 A1